# EUROPEAN PATENT APPLICATION

(11) **EP 0 876 766 A2**
(43) Date of publication of application: **11.11.1998**
(21) Application number: 98500086.8
(22) Date of filing: 08.04.1998
(51) Int. Cl.: A23L 1/0532, A23L 1/212

(54) **A process to prepare olive filling mass**

(30) Priority: 09.04.1997 ES 9700757
(71) Applicant: Munoz Alvarez, Antonio Francisco, 06200 Almendralejo (Badajoz) (ES)
(72) Inventor: Munoz Alvarez, Antonio Francisco, 06200 Almendralejo (Badajoz) (ES)
(74) Representative: Asensio Fernandez-Castanys, Trinidad

(57) **Abstract**

The process to prepare olive filling mass includes the incorporation of improved filling ingredients to said mass before crushing and stirring thereof, such as citric acid, lactic acid, proteins and flavoring, in variable proportions, as well as the substitution of filling ingredients by products such as cheese, garlic and/or other products the properties of which do not interfere with the remaining ingredients.

## Description

### OBJECT OF THE INVENTION

The object of the present invention relates to a process to prepare olive filling mass, which provides essential novelty characteristics and important advantages with respect to currently known and used processes for this same purpose in the current state of the art.

More specifically, the invention proposes developing an improved process to prepare olive filling mass that allows the application of a series of products, which have not been used up to now for their incorporation to the mass that contitutes the filling of olives, hence significantly increasing the range of application possibilities of the process.

The field of application of this invention is evidently included within the industry dedicated to the preparation of filled olives as a finished product.

### BACKGROUND OF THE INVENTION

As may be supposed, the nearest background to the object of the present description is the content of the Spanish Patent Application No. 9401120, with respect to which those improvements stated by the present specification are effected.

In fact, the Spanish Patent No. 9401120 describes and claims a procedure by which it is possible to prepare a filling that may be used to fill olives. For this purpose, various ingredients are mixed together in adequate proportions to obtain the desired mass of filling, which is then introduced inside an olive previously stoned using the normal procedures. The advantages provided by this Main Patent, consist in the use of natural products that once combined with thickeners, when necessary, a mass is obtained which may be handled by a filling machine, without needing to use any other preserving additive or similar. On the other hand, as described by the mentioned Main Patent, the tests performed permit fillings to be implemented as from ingredients which until that date had not been used for such a purpose, among which are products such as orange, lemon, red chili pepper, hazel nut, etc.

As may be understood, the proportion of said ingredients basically depends on the nature of each one of them, it being possible to vary them between 1 to 40%, whilst the incorporation of thickener to the mixture, in those cases requiring it, may range from 1 to 5% by weight of the total mass. The preferred thickening product for the invention is guar gum.

Moreover in the mixture, water and a gelling product are included which, preferably is an alginate.

### DESCRIPTION OF THE INVENTION

Although the mass of filling prepared according to the process of the Patent No. 9401120 and which has been commented above, perfectly complies with the purpose for which it has been developed, it is certain that determined improvements exist which may be introduced to said process and which basically affect the ingredients intervening in the preparation of said olive filling mass.

Hence, it has been found that other ingredients may be added improving the final characteristics of the filling mass obtained, among which are products like lactic acid, citric acid, proteins or some flavoring product.

On the grounds of the improvements to the invention, the mass is based on a specific filling product to be introduced into it, which is placed in a suitable container in the previously established proportion and is mixed with the remaining products intervening in the suitable proportions. Then, the contents of this container are stirred at a predetermined speed and after a time, between 16 and 80 according to both the ingredients and the stirring speed itself, the filling mass is obtained. Then, this filling is introduced inside the previously stoned olive.

Afterwards, an embodiment of the improvements proposed for the present invention is shown, together with the respective proportions, being:
◆ Filling product 1 to 40%
◆ Alginate 1 to 20%
◆ Guar gum (if necessary) 20%
◆ Citric acid 0 to 10%
◆ Lactic acid 0 to 10%
◆ Flavoring 0 to 15%
◆ Proteins 0 to 10%
Water Rest up to 100%

As may be appreciated and according to the above, the improvements now include the possibility of adding a flavoring compound to the mixture obtained, with the purpose of improving its flavor, if necessary.

Among the filling products which may be incorporated to the mixture in a proportion of 1 to 40%, as has been said, are besides those considered in the mentioned Main Patent, the following:
◆ Cheese
◆ Cheese with grapes
◆ Garlic
◆ Dressings (mixture of herbs and similar, like for example, cumin, nutmeg, thyme, marjoram, garlic, red chili pepper, etc.)
◆ Honey (alone or also mixed with pollen and/or royal jelly).
◆ Walnut
◆ Fried onion
◆ Aubergine
◆ Capers
◆ Boiled rice
◆ Shellfish
◆ Mussels
◆ Radishes
◆ Mint
◆ Fennel
◆ Beetroot
◆ Ham
◆ Mint or eucalyptus or both
◆ Avocado pear
◆ Pineapple
◆ Tomato with dressings
◆ Animal livers
◆ Fuet
◆ Caviar
◆ Cola
◆ Coffee
◆ Chocolate
◆ Sweet ingredients
◆ Sherry

Of course, the filling products above are examples of application, although their list should not be interpreted as limiting, as other products may also be included which are not listed and the properties of which do not interfere with those of the other ingredients.

Indeed, and as expressed in the Main Patent, the product obtained (filled olives) may be subjected to the pertinent conditions for their later packing by means of any known procedure.

It is not considered necessary to extend the contents of this description further, for an expert in the matter to understand its scope and the advantages obtained thereof, as well as developing and executing the described object.

Nevertheless, and since all the above corresponds to a preferred embodiment, it is clear that within its essence detailed modifications may be introduced which may particularly affect the ingredients or their proportions, without this affecting the scope of the present invention.

## Claims

1. A process to prepare olive filling mass, wherein the mass is prepared from a basic filling product combined with alginate and water in suitable proportions and crushed until obtaining a uniform mass, including, if necessary a thickener, characterized in that, moreover, other ingredients such as citric acid, lactic acid, proteins and flavoring intervene in the preparation of the filling mass, all of which are crushed together in a stirrer for 15 to 80 seconds according to both the mixture ingredients and the stirring speed thereof.

2. A process according to claim 1, characterized in that each one of the additional ingredients intervene in the mixture in a proportion ranging from 1 to 10% according to the component and the final characteristics desired for said filling mass.

3. A process according to the preceeding claims, characterized in that the filling ingredient is chosen from the group consisting of cheese, cheese and grape, garlic, dressings (like mixtures of herbs and similar, such as cumin, nutmeg, thyme, marjoram, garlic, red chili pepper and similar), honey (whether alone or mixed with pollen and/or royal jelly), cobnut, walnut, fried onion, aubergine, capers, boiled rice, shellfish, mussels, radishes, mint, fennel, beetroot, ham, eucalyptus, mixture of mint and eucalyptus, avocado pear, pineapple, tomato with dressings, animal liver, fuet, caviar, cola, coffee, chocolate, sweet ingredients and sherry or any other products the physico-chemical properties of which do not interfere with any of those of the other ingredients of the mixture.
